# EUROPÄISCHE PATENTSCHRIFT

(11) **EP 4 045 341 B1**
(45) Veröffentlichungstag und Bekanntmachung des Hinweises auf die Patenterteilung: **22.10.2025**
(21) Anmeldenummer: 20785742.6
(22) Anmeldetag: 01.10.2020
(51) Int. Cl.: B60D 1/06, B60D 1/58

(54) **KUPPLUNGSPFANNE**
COUPLING SOCKET
DOUILLE DE COUPLAGE

(30) Priorität: 16.10.2019 AT 508882019
(43) Veröffentlichungstag der Anmeldung: 24.08.2022
(73) Patentinhaber: Scharmüller, Josef, 4892 Fornach (AT); Scharmüller, Christine, 4892 Fornach (AT)
(72) Erfinder: Scharmüller, Josef jun., 4870 Vöcklamarkt (AT); Scharmüller, Josef, 4892 Fornach (AT); Scharmüller, Christine, 4892 Fornach (AT)
(74) Vertreter: Gibler & Poth Patentanwälte KG
(86) Internationale Anmeldenummer: PCT/EP2020/077573
(87) Internationale Veröffentlichungsnummer: WO 2021/073892

(56) Entgegenhaltungen:
- EP-A1- 2 682 290
- WO-A1-02/086339
- WO-A1-2019/117627
- DE-A1- 2 235 874
- FR-A- 903 599
- US-A1- 2007 140 783

## Beschreibung

Die Erfindung betrifft eine Kupplungspfanne gemäß dem Oberbegriff des Patentanspruches 1.

Es ist bekannt, dass in Kugelkupplungen flüssige Schmierstoffe wie Schmierfette oder Öle, pulverförmige Schmierstoffe wie Graphit, oder Schmierstoffe in Form von Festkörperbauteilen verwendet werden, um den Reibungswiderstand zwischen Kupplungspfanne und Kupplungskugel zu reduzieren und ein mögliches Verkeilen der Kupplungskugel in der Kupplungspfanne zu vermeiden.

In der Regel wird solch ein Festkörperbauteil in Form einer Kappe formschlüssig in der Kupplungspfanne befestigt. Hierzu kann die Kupplungspfanne eine Nut aufweisen, in welche Nut die Kappe mit einem, von dem insbesondere halbkreisförmigen bzw. kugelkalottenförmigen Körper der Kappe, abragenden Fortsatz eingreift. Im Folgenden wird ein kappenförmiges Festkörperschmierstoffbauteil als Schmierstoffkappe bezeichnet.

Es ist die FR 903 599 A bekannt, welche eine Anhängerkupplung mit einer Kupplungskugel, einem Kautschuk-Zwischenelement und Spannbacken zeigt. Das Kautschuk-Zwischenelement weist ein einvulkanisiertes Stahlblech auf, welches bei Befestigung des Kautschuk-Zwischenelements mittels einer Niete an der Kupplungspfanne in die Richtung der Aufnahmeöffnung für die Kupplungskugel weist.

Die DE 2 235 874 A1 zeigt ein lösbares Kugelgelenk mit einem Kugelkopf und einer in das Gelenkgehäuse eingelassenen Lagerschale, beispielsweise aus gleitfähigem Kunststoff. Die Innenwandung des Gelenkgehäuses weist eine ringumlaufende Nut mit einer dachförmigen Abschrägung auf, welche die Aufnahme eines Federringes ermöglicht.

Die EP 2 682 290 A1 zeigt eine Kupplungspfanne mit einem Festkörperschmierstoffbauteil, welche zur Kupplung mit einer Kupplungskugel vorgesehen ist. Das Festkörperschmierstoffbauteil weist einen Rastvorsprung auf, der in eine Nut an der Kupplungspfanne einrastet.

Die WO 02/086339 A1 zeigt ein Winkelgelenk mit einer Gelenkkugel, einer Kugelpfanne und einem Auskleidungsteil. Das Auskleidungsteil ist kappenartig ausgeführt und weist einen Aufnahmeraum in Form einer Kugelkalotte für die Gelenkkugel auf.

Die US 2007/0140783 A1 zeigt ein Kugelgelenk mit einem Kugelkopf, ein erstes Einbauteil mit Kammern und ein zweites Einbauteil mit einem Zapfen. Das erste Einbauteil befindet sich in einem Kugelkopfgehäuse, wobei das zweite Einbauteil an dem Kugelkopf befestigt ist.

Nachteilig daran ist, dass diese Art der Befestigung der Schmierstoffkappe in der Kupplungspfanne eine hohe Maßgenauigkeit erfordert. Sowohl die Nut als auch der Fortsatz müssen genau aufeinander abgestimmt sein, damit die Schmierstoffkappe formschlüssig in der Kupplungspfanne angeordnet ist. Überraschenderweise hat sich gezeigt, dass häufig ein Freiraum zwischen dem Bereich des Poles der Schmierstoffkappe und der Kupplungspfanne aufgrund von Maßungenauigkeiten verbleibt. Hierzu reichen auch schon sehr kleine Maßungenauigkeiten aus, um diesen Freiraum zwischen Kupplungspfanne und Schmierstoffkappe zu erzeugen. Der Bereich des Poles der Schmierstoffkappe ist hierbei ein Bereich des kleinsten Radius des Großkreises der Schmierstoffkappe. Großkreise der Schmierstoffkappe können auch als Breitengrade der Schmierstoffkappe bezeichnet werden. Im Kupplungsbetrieb kommt es, insbesondere bei der Arbeit auf einem Feld, oder bei dem Fahren über Bremsschwellen, vor, dass vertikale Stöße der Kupplungskugel gegen den Bereich des Poles der Schmierstoffkappe stattfinden und durch diese hohe Belastung bzw. durch die Kräfte der Stöße der Fortsatz der Schmierstoffkappe beschädigt wird, da der Fortsatz diese Kräfte aufnehmen muss, um die Schmierstoffkappe in der Kupplungspfanne zu halten. In der Regel ist ein stirnseitiger Rand der Schmierstoffkappe bei einer Anordnung der Schmierstoffkappe in der Kupplungspfanne exponiert und nicht gegen Stöße geschützt. Hierdurch kann die Schmierstoffkappe bei dem Einführen der Kupplungskugel in die Kupplungspfanne bzw. bei dem Aufsetzen der Kupplungspfanne auf der Kupplungskugel bei dem Kupplungsvorgang leicht beschädigt werden. Insbesondere bei hohen Stützlasten, wie sie im Kupplungsbetrieb eines landwirtschaftlichen Fahrzeuges mit einem Anhänger vorkommen, kann die Schmierstoffkappe stark beschädigt werden.

Durch die formschlüssige Befestigung der Schmierstoffkappe in einer Nut kann die Schmierstoffkappe somit leicht beschädigt werden, wodurch eine geringe Lebensdauer der Schmierstoffkappe und ein hoher Wartungsbedarf der Kugelkupplung entsteht.

Aufgabe der Erfindung ist es daher eine Kupplungspfanne der eingangs genannten Art anzugeben, mit welcher die genannten Nachteile vermieden werden können, mit welcher ein geringer Wartungsbedarf der Kugelkupplung ermöglicht wird.

Erfindungsgemäß wird dies durch die Merkmale des Patentanspruches 1 erreicht.

Dadurch ergibt sich der Vorteil, dass eine längere Lebensdauer der Schmierstoffkappe und somit ein geringer Wartungsbedarf der Kugelkupplung ermöglicht werden. Dadurch, dass der stirnseitige Rand der Schmierstoffkappe - in der Haupteinführrichtung gesehen - hinter der Einführhilfe angeordnet ist kann der stirnseitige Rand der Schmierstoffkappe bei dem Einführen der Kupplungskugel bzw. bei dem Aufsetzen der Kupplungspfanne auf der Kupplungskugel nicht beschädigt werden. Da die Einführhilfe den stirnseitigen Rand der Schmierstoffkappe vollständig verdeckt kann dieser bei vertikalen Stößen während des Betriebes und bei dem Kupplungsvorgang nicht abgenützt bzw. beschädigt werden. Die Energie wird bei Stößen im Betrieb, also im gekuppelten Zustand, auf die gesamte Schmierstoffkappe verteilt, wodurch diese keine durch Befestigungsfortsätze, die beispielsweise in eine Nut eingreifen, verursachten Schwachstellen aufweist. Insbesondere bei hohen Stützlasten wirkt sich die randlose Ausführung der Schmierstoffkappe in der Kupplungspfanne besonders günstig aus, wodurch eine deutlich verlängerte Lebenszeit der Schmierstoffkappe
[weiter auf Seite 3 der ursprünglichen Beschreibung]
ermöglicht und ein Wartungsbedarf der Kugelkupplung reduziert wird.

Die Unteransprüche betreffen weitere vorteilhafte Ausgestaltungen der Erfindung.

Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Falls sich eine an den stirnseitigen Rand angrenzende Innenkante der Schmierstoffkappe auf der Einführhilfe abstützt, ergibt sich der Vorteil, dass ein Kippen der Schmierstoffkappe in oder aus der Kupplungspfanne vermieden wird. Durch ein Kippen der Schmierstoffkappe in der Kupplungspfanne kann die Schmierstoffkappe bei Stößen und Relativbewegungen in mehreren Achsen stark beschädigt werden.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 einen Längsschnitt durch die Kupplungspfanne;
Fig. 2 eine Detailaufnahme der Kupplungspfanne und
Fig. 3 die Schmierstoffkappe in perspektivischer Ansicht.

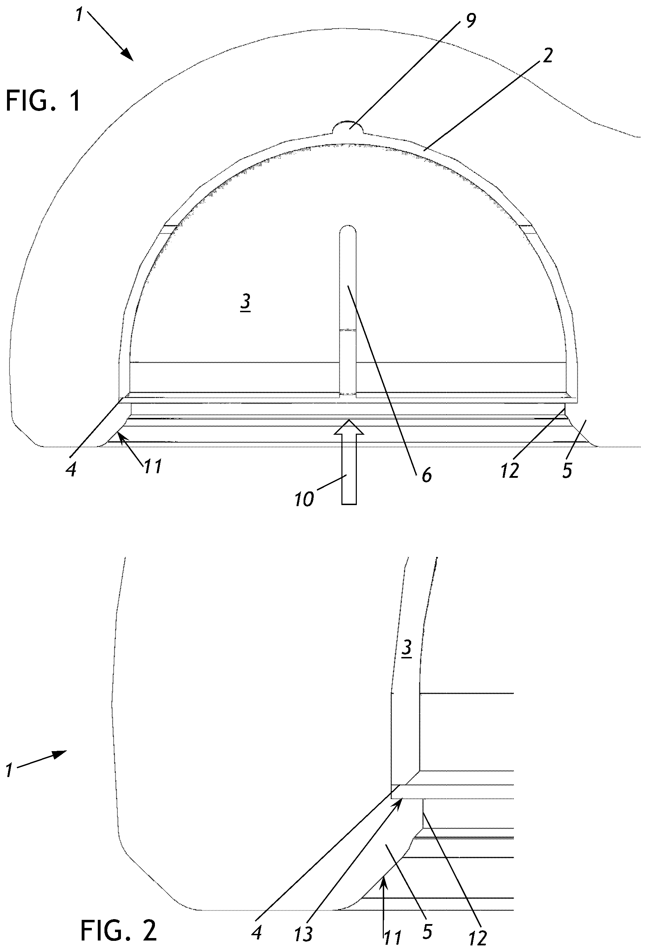

Die Fig. 1 bis 3 zeigen zumindest Teile einer bevorzugten Ausführungsform einer Kupplungspfanne 1 zur Kupplung mit einer Kupplungskugel, wobei die Kupplungspfanne 1 einen konkaven Kupplungsaufnahmeraum 2 mit einer Haupteinführrichtung 10 für die Kupplungskugel aufweist, wobei in dem Kupplungsaufnahmeraum 2 eine im Wesentlichen halbkugelförmige Schmierstoffkappe 3 mit einem stirnseitigen Rand 4 angeordnet ist, wobei die Schmierstoffkappe 3 an ihrer konvexen Außenseite eine Innenwandung des Kupplungsaufnahmeraumes 2 flächig berührt und an ihrer konkaven Innenseite eine Aufnahme für die Kupplungskugel aufweist, wobei die Kupplungspfanne 1 in dem Kupplungsaufnahmeraum 2 eine Einführhilfe 5 aufweist, wobei der stirnseitige Rand 4 der Schmierstoffkappe 3 - in der Haupteinführrichtung 10 gesehen - hinter der Einführhilfe 5 angeordnet ist, und wobei die Einführhilfe 5 den stirnseitigen Rand 4 der Schmierstoffkappe 3 vollständig verdeckt.

Die Kupplungspfanne 1 wird insbesondere in einer Fahrzeugkupplung für den landwirtschaftlichen Bereich verwendet, also für die Kupplung eines Traktors mit einem landwirtschaftlichen Anhänger. Die Kupplungspfanne 1 weist einen konkaven Kupplungsaufnahmeraum 2 mit einer Haupteinführrichtung 10 für die Kupplungskugel auf. Die Innenfläche der Kupplungspfanne 1 ist insbesondere teilsphärische ausgebildet. Die Haupteinführrichtung 10 ist jene Richtung bzw. jener Winkel, in welchem die Kupplungskugel in die Kupplungspfanne 1 eingeführt wird bzw. in welchem die Kupplungspfanne 1 auf der Kupplungskugel aufgesetzt wird. Die Haupteinführrichtung 10 ist insbesondere normal zu einer horizontalen Ebene der Kupplungspfanne 1, welche Ebene durch einen an der Einführhilfe 5 oder an dem stirnseitigen Rand 4 der Schmierstoffkappe 3 verlaufenden Breitengrad aufgespannt wird, wobei die Haupteinführrichtung 10 in Richtung des Bereichs des Poles der Schmierstoffkappe 3 bzw. des Kupplungsaufnahmeraumes 2 weist, was beispielhaft in Fig. 1 gezeigt ist.

Der Bereich des Poles des Kupplungsaufnahmeraumes 2 ist hierbei ein Bereich des kleinsten Radius des Großkreises der Kupplungsaufnahmeraumes 2.

Bezüglich des Winkels der Haupteinführrichtung 10 ist eine Toleranz vorgesehen. Das bedeutet, dass es in der Praxis nicht immer möglich ist, beim Kupplungsvorgang die Kupplungspfanne 1 genau über der Kupplungskugel zu positionieren. Es kann demnach vorkommen, dass die Kupplungspfanne 1 in einem zu der Haupteinführrichtung 10 schrägen Winkel auf die Kupplungskugel aufgeschoben bzw. aufgesetzt wird.

Die Kupplungspfanne 1 weist einen Grundkörper auf. Bevorzugt kann der Grundkörper einen Pfannenabschnitt mit dem Kupplungsaufnahmeraum 2 aufweisen, an welchem Pfannenabschnitt ein Schaft angeformt ist. Der Kupplungsaufnahmeraum 2 weist eine Innenwandung auf. Der Schaft kann weiters an einer Befestigungsplatte angeformt sein, welche zur Befestigung der Kupplungspfanne 1 an einem Anhänger ausgebildet ist.

Der Grundkörper der Kupplungspfanne 1 ist bevorzugt aus einem Metall ausgebildet.

Es kann auch bevorzugt vorgesehen sein, dass der Grundkörper aus einer Legierung, insbesondere aus Stahl, ausgebildet ist.

Die Schmierstoffkappe 3 ist insbesondere halbkugelförmig ausgebildet und weist einen stirnseitigen Rand 4 auf. Es kann auch vorgesehen sein, dass zumindest die Außenseite der Schmierstoffkappe 3 teilsphärisch ausgebildet ist. Die Schmierstoffkappe 3 kann insbesondere in einem Bereich des stirnseitigen Randes 4 eine gerade Fläche aufweisen. Der stirnseitige Rand 4 ist insbesondere im Wesentlichen umlaufend ausgebildet. Es ist vorgesehen, dass die Schmierstoffkappe 3 an ihrer konvexen Außenseite die Innenwandung des Kupplungsaufnahmeraumes 2 flächig berührt. Die Schmierstoffkappe 3 weist weiters an ihrer konkaven Innenseite eine Aufnahme für die Kupplungskugel auf.

Die Kupplungspfanne 1 weist in dem Kupplungsaufnahmeraum 2 eine Einführhilfe 5 auf. Die Einführhilfe 5 ist bevorzugt ein von der Kupplungspfanne 1 in den Kupplungsaufnahmeraum 2 abragender Fortsatz. Die Einführhilfe 5 kann bevorzugt an die Kupplungspfanne 1 angeformt sein. Die Einführhilfe 5 kann mit der Kupplungspfanne 1 auch einstückig ausgebildet sein.

Besonders bevorzugt erstreckt sich von der Einführhilfe 5 aus die Innenwandung des Kupplungsaufnahmeraumes 2 im Wesentlichen stetig und halbkugelförmig in Richtung des Poles des Kupplungsaufnahmeraumes 2. Bevorzugt befinden sich somit in einem unmittelbar angrenzenden Bereich der Einführhilfe 5 keine Einbuchtungen oder Nuten. Das heißt jedoch nicht, dass die gesamte Innenwandung des Kupplungsaufnahmeraumes 2 keine Ausnehmungen aufweisen darf, sondern, dass in dem unmittelbar angrenzenden Bereich an die Einführhilfe 5 keine Ausnehmungen angeordnet sind.

Die Einführhilfe 5 ist in dem Kupplungsaufnahmeraum 2 insbesondere umlaufend ausgebildet. Besonders bevorzugt umgibt die Einführhilfe 5 eine Einführöffnung des Kupplungsaufnahmeraumes 2 ringförmig. Die Einführöffnung des Kupplungsaufnahmeraumes 2 ist jene Öffnung des Kupplungsaufnahmeraumes 2, in welche bei dem Kupplungsvorgang die Kupplungskugel eingeführt wird.

Die Einführhilfe 5 kann bevorzugt eine Gleitfläche 11 aufweisen. Die Gleitfläche 11 kann insbesondere eine zur Haupteinführrichtung 10 schräg angeordnete Fläche sein. Die Gleitfläche 11 erleichtert das Aufsetzen der Kupplungspfanne 1 auf der Kupplungskugel bzw. das Einführen der Kupplungskugel in die Kupplungspfanne 1. Durch die Gleitfläche 11 kann die Kupplungspfanne 1 einfach über die Kupplungskugel geschoben bzw. aufgesetzt werden. Bei einem Kupplungsvorgang bei einem von der Haupteinführrichtung 10 abweichendem Winkel gleitet die Kupplungspfanne 1 bzw. die Kupplungskugel entlang der Gleitfläche 11 bis die Kupplungspfanne 1 in der Haupteinführrichtung 10 auf die Kupplungskugel aufgesetzt werden kann, bzw. bis die Kupplungskugel in den Kupplungsaufnahmeraum 2 eingeführt werden kann.

Die Einführhilfe 5 weist bevorzugt eine an die Gleitfläche 11 angrenzende und parallel zur Haupteinführrichtung 10 verlaufende Absatzkante 12 auf.

Es ist weiters vorgesehen, dass der stirnseitige Rand 4 der Schmierstoffkappe 3 - in der Haupteinführrichtung 10 gesehen - hinter der Einführhilfe 5 angeordnet ist, und dass die Einführhilfe 5 den stirnseitigen Rand 4 der Schmierstoffkappe 3 vollständig verdeckt, was beispielhaft in den Fig. 1 und 2 dargestellt ist. In der Haupteinführrichtung 10 gesehen ist somit der stirnseitige Rand 4 der Schmierstoffkappe 3 in der Kupplungspfanne 1 nicht sichtbar.

Dadurch ergibt sich der Vorteil, dass eine längere Lebensdauer der Schmierstoffkappe 3 und somit ein geringer Wartungsbedarf der Kugelkupplung ermöglicht werden. Dadurch, dass der stirnseitige Rand 4 der Schmierstoffkappe 3 - in der Haupteinführrichtung 10 gesehen - hinter der Einführhilfe 5 angeordnet ist kann der stirnseitige Rand 4 der Schmierstoffkappe 3 bei dem Einführen der Kupplungskugel bzw. bei dem Aufsetzen der Kupplungspfanne 1 auf der Kupplungskugel nicht beschädigt werden. Da die Einführhilfe 5 den stirnseitigen Rand 4 der Schmierstoffkappe 3 vollständig verdeckt kann dieser bei vertikalen Stößen während des Betriebes und bei dem Kupplungsvorgang nicht abgenützt bzw. beschädigt werden. Die Energie wird bei Stößen im Betrieb, also im gekuppelten Zustand, auf die gesamte Schmierstoffkappe 3 verteilt, wodurch diese keine durch Befestigungsfortsätze, die beispielsweise in eine Nut eingreifen, verursachten Schwachstellen aufweist. Insbesondere bei hohen Stützlasten wirkt sich die randlose Ausführung der Schmierstoffkappe 3 in der Kupplungspfanne 1 besonders günstig aus, wodurch eine deutlich verlängerte Lebenszeit der Schmierstoffkappe 3 ermöglicht und ein Wartungsbedarf der Kugelkupplung reduziert wird.

Die Kupplungspfanne 1 ist in einem gekuppelten Zustand auf der Kupplungskugel eines Kupplungsteils aufgesetzt, wodurch eine um drei Achsen verschwenkbare Verbindung zwischen dem Kupplungsteil und der Kupplungspfanne 1 entsteht. In gekuppeltem Zustand berührt die konkave Innenseite der Schmierstoffkappe 3 einen Teil der Oberfläche der Kupplungskugel.

Es kann bevorzugt vorgesehen sein, dass sich eine an den stirnseitigen Rand 4 angrenzende Innenkante der Schmierstoffkappe 3 auf der Einführhilfe 5 abstützt, was in den Fig. nicht dargestellt ist.

Es kann auch bevorzugt vorgesehen sein, dass sich der stirnseitige Rand 4 im Wesentlichen auf der Einführhilfe 5 abstützt, was in den Fig. nicht dargestellt ist. In den Fig. 1 und 2 ist vielmehr das Spiel überdimensioniert dargestellt. Hierdurch wird ein guter Halt der Schmierstoffkappe 3 in der Kupplungspfanne 1 sichergestellt und ein unbeabsichtigtes Herausrutschen der Schmierstoffkappe 3 aus der Kupplungspfanne 1 vermieden.

Es kann bevorzugt vorgesehen sein, dass die Schmierstoffkappe 3 eine angrenzend und schräg zu dem stirnseitigen Rand 4 angeordnete Fläche aufweist, wodurch ein Aufsetzen der Kupplungspfanne 1 auf der Kupplungskugel bzw. ein Einführen der Kupplungskugel in der Kupplungspfanne 1 weiter erleichtert wird.

Die Einführhilfe 5 kann besonders bevorzugt eine im Wesentlichen ebene Aufstützfläche 13 zum Aufstützen für den stirnseitigen Rand 4 bzw. für die an den stirnseitigen Rand 4 angrenzende Innenkante aufweisen.

Die Aufstützfläche 13 kann bevorzugt an die Absatzkante 12 angrenzen und mit der Absatzkante 12 im Wesentlichen einen rechten Winkel einschließen.

Durch das Abstützen der an den stirnseitigen Rand 4 angrenzende Innenkante auf der Einführhilfe 5 ergibt sich der Vorteil, dass diese Kante für bei dem Kupplungsvorgang oder im Betrieb stattfindenden Stöße und Belastungen nicht exponiert ist und somit die Gefahr einer Beschädigung dieser Kante stark vermindert wird.

Durch das Abstützen des stirnseitigen Randes 4 auf der Aufstützfläche 13 ergibt sich der Vorteil, dass ein Kippen der Schmierstoffkappe 3 in oder aus der Kupplungspfanne 1 vermieden wird. Durch ein Kippen der Schmierstoffkappe 3 in der Kupplungspfanne 1 kann die Schmierstoffkappe 3 bei Stößen und Relativbewegungen, insbesondere in mehreren Achsen, stark beschädigt werden, wodurch diese ausgetauscht werden muss.

Bevorzugt kann vorgesehen sein, dass die Schmierstoffkappe 3 wenigstens ein Polymer umfasst. Das Polymer kann insbesondere ein teil- oder hochkristallines Polymer sein. Das Polymer kann insbesondere ein Polyamid oder ein Polyaramid umfassen.

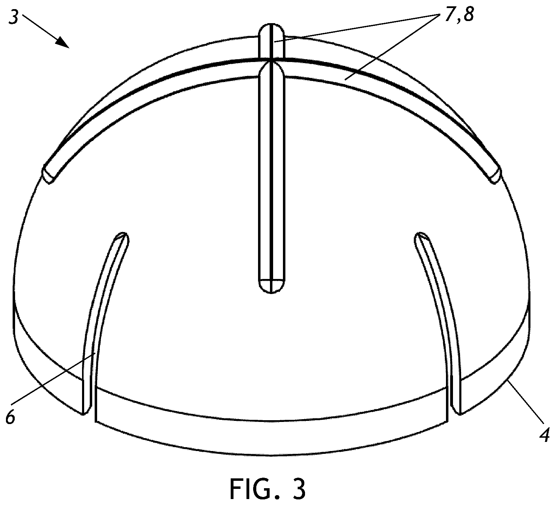

Besonders bevorzugt kann vorgesehen sein, dass die Schmierstoffkappe 3 an dem stirnseitigen Rand 4 wenigstens einen Schlitz 6 aufweist. Mittels des Schlitzes 6 kann die Schmierstoffkappe 3 einfach in den Kupplungsaufnahmeraum 2 eingeführt bzw. eingesetzt und auch wieder entnommen werden indem die Schmierstoffkappe 3, insbesondere der stirnseitige Rand 4 der Schmierstoffkappe 3, zusammengedrückt wird. Eine Schmierstoffkappe 3 mit wenigstens einem Schlitz 6 ist beispielhaft in Fig. 3 dargestellt.

Für ein besonders einfaches Einführen und für eine besonders einfache Entnahme der Schmierstoffkappe 3 in bzw. aus dem Kupplungsaufnahmeraum 2 kann bevorzugt vorgesehen sein, dass die Schmierstoffkappe 3 mehrere, insbesondere in gleichen Abständen zueinander angeordnete, Schlitze 6 aufweist. Bevorzugt sind die mehreren Schlitze 6 an dem stirnseitigen Rand 4 der Schmierstoffkappe 3 angeordnet. Hierbei ist besonders bevorzugt, dass der stirnseitige Rand 4 mittels der Schlitze 6 durchbrochen ist.

Es kann bevorzugt vorgesehen sein, dass die Schmierstoffkappe 3 drei, insbesondere vier, bevorzugt sechs, Schlitze 6 aufweist.

Durch die erhöhte Anzahl an Schlitzen 6 kann die Schmierstoffkappe 3 noch einfacher zusammengedrückt und somit besonders gut entnommen bzw. eingeführt werden.

Der wenigstens eine Schlitz 6 ist insbesondere eine längliche Ausnehmung bzw. Durchbrechung der Schmierstoffkappe 3. Bevorzugt ist der wenigstens eine Schlitz 6 normal zu einem Großkreis der Schmierstoffkappe 3 angeordnet. Mit anderen Worten, es verläuft der wenigstens eine Schlitz 6 bevorzugt entlang eines Längengrades der Schmierstoffkappe 3. Ein Längengrad der Schmierstoffkappe 3 verläuft von dem Pol der Schmierstoffkappe 3 in Richtung zu dem stirnseitigen Rand 4 der Schmierstoffkappe 3. Mehrere Schlitze 6 sind insbesondere so angeordnet, dass jeder Schlitz 6 zu seinen benachbarten Schlitzen 6 den größtmöglichen geometrischen Abstand auf der Schmierstoffkappe 3 aufweist.

Es kann bevorzugt vorgesehen sein, dass sich der wenigstens eine Schlitz 6 über wenigstens 30%, insbesondere wenigstens 50%, bevorzugt wenigstens 70%, der Länge entlang eines Längengrades von dem stirnseitigen Rand 4 bis zu dem Pol der Schmierstoffkappe 3 erstreckt.

Um einen besonders guten Halt der Schmierstoffkappe 3 in dem Kupplungsaufnahmeraum 2, insbesondere während des Betriebes, zu ermöglichen, kann besonders bevorzugt vorgesehen sein, dass die Schmierstoffkappe 3 eine Verdrehsicherung 7 gegenüber dem Kupplungsaufnahmeraum 2 aufweist. Während des Betriebes bedeutet hierbei, dass die Kupplungspfanne 1 mit der Kupplungskugel gekuppelt ist und ein Zugfahrzeug mittels dieser Kugelkupplung mit einem Nachlauffahrzeug bzw. Anhänger verbunden ist.

Es kann insbesondere vorgesehen sein, dass die Verdrehsicherung 7 an der Außenseite der Schmierstoffkappe 3 angeordnet ist.

Besonders bevorzugt kann vorgesehen sein, dass die Verdrehsicherung 7 als wenigstens eine Rippe 8 ausgestaltet ist, wodurch eine einfache Fertigung der Verdrehsicherung 7 ermöglicht wird.

Es kommt häufig vor, dass eine Kupplungspfanne 1 eine kreuzförmige Ausnehmung zur Aufnahme von, insbesondere fetthältige bzw. pastösen, Schmierstoffen aufweist. Vorteilhafterweise kann diese Ausnehmung als Aufnahme 9 für die wenigstens eine Rippe 8 fungieren.

Besonders bevorzugt kann vorgesehen sein, dass die wenigstens Rippe 8 entlang eines Längengrades an der Schmierstoffkappe 3 angeordnet ist.

Es kann bevorzugt vorgesehen sein, dass sich die wenigstens eine Rippe 8 über wenigstens 30%, insbesondere wenigstens 50%, bevorzugt wenigstens 70%, der Länge entlang eines Längengrades von dem Pol bis zu dem stirnseitigen Rand 4 der Schmierstoffkappe 3 erstreckt.

Vorzugsweise kann vorgesehen sein, dass die Verdrehsicherung 7 kreuzförmig angeordnete Rippen 8 umfasst, wodurch eine besonders gute Verdrehsicherung gegenüber dem Kupplungsaufnahmeraum 2 ermöglicht wird. Die Schmierstoffkappe 3 kann mittels der kreuzförmig angeordneten Rippen 8 lagefest in dem Kupplungsaufnahmeraum 2 gehalten werden. Hierdurch ergibt sich ein geringer Verschleiß und eine geringe Abnutzung der Schmierstoffkappe 3 an dem stirnseitigen Rand 4, da sich die Schmierstoffkappe 3 in Bezug auf den Kupplungsaufnahmeraum 2, nicht dreht. Weiters ist hierbei vorteilhaft, dass die Schmierstoffkappe 3, im Gegensatz zu einer Ausführung mit einer Nut und einem Fortsatz der Schmierstoffkappe, der in diese Nut eingreift, nicht verkanten kann, wodurch der Verschleiß der Schmierstoffkappe 3 reduziert und ein einfaches Austauschen der Schmierstoffkappe 3 ermöglicht wird.

Es kann bevorzugt vorgesehen sein, dass die wenigstens eine Rippe 8 mittig zwischen den Schlitzen 6 angeordnet ist. Insbesondere zwei oder mehr als zwei Schlitze 6 sind jeweils in einem Abstand zueinander angeordnet. Bevorzugt ist die wenigstens eine Rippe 8 in der Hälfte des Abstandes der Schlitze 6 zueinander, also in der Hälfte der Länge entlang eines Breitengrades von einem Schlitz 6 zu einem benachbarten Schlitz 6 angeordnet, was beispielhaft in Fig. 3 dargestellt ist. Hierdurch ergibt sich eine gute geometrische Ausnützung der Fläche der Schmierstoffkappe 3.

Es kann auch bevorzugt vorgesehen sein, dass die Schmierstoffkappe 3 mehrere Verdrehsicherungen 7 aufweist. Beispielsweise können mehrere Rippen 8 in einem geometrischen Muster oder mehrere einzelne kreuzförmig angeordnete Rippen 8 an der Schmierstoffkappe 3 angeordnet sein.

Für einen besonders guten Widerstand der Schmierstoffkappe 3 gegen Verdrehungen in dem Kupplungsaufnahmeraum 2 kann vorgesehen sein, dass die Verdrehsicherung 7 von der Schmierstoffkappe 3 abragt und dass an der Innenwandung des Kupplungsaufnahmeraumes 2 eine formschlüssige Aufnahme 9 für die Verdrehsicherung 7 angeordnet ist.

Im Falle von Rippen 8 als Verdrehsicherung 7 weist die Kupplungspfanne 1 bevorzugt zu den Rippen 8 gegengleiche Vertiefungen auf, die eine Aufnahme 9 für die Rippen 8 ausbilden. In einem Montagezustand der Schmierstoffkappe 3 in dem Kupplungsaufnahmeraum 2 greifen die Rippen 8 formschlüssig in die Vertiefungen des Kupplungsaufnahmeraumes 2 ein.

Wie bereits zuvor erwähnt, kann diese formschlüssige Aufnahme 9 eine Aufnahme für insbesondere fetthältige bzw. pastöse Schmierstoffe sein. Falls eine Kupplungspfanne 1 solch eine Aufnahme 9 für Schmierstoffe in ihrem Kupplungsaufnahmeraum 2 nicht aufweist, kann es auch vorgesehen sein, dass die Aufnahme 9 durch eine materialabtragende Methode, insbesondere durch Fräsen, hergestellt wird.

Die Vertiefungen des Kupplungsaufnahmeraumes 2 können insbesondere längliche Aufnahmen 9 sein.

Es kann alternativ auch vorgesehen sein, dass die Verdrehsicherung 7 in Form mehrerer, insbesondere entlang eines Längengrades der Schmierstoffkappe 3 angeordneter und von der Schmierstoffkappe 3 abragender, Fortsätze ausgebildet ist. Hierbei kann bevorzugt vorgesehen sein, dass der Kupplungsaufnahmeraum 2 zu den Fortsätzen gegengleiche Aufnahmen aufweist.

Es kann auch vorgesehen sein, dass die Schmierstoffkappe 3 einstückig ausgebildet ist, wodurch die Schmierstoffkappe 3 besonders einfach gefertigt werden kann. Bevorzugt kann weiters vorgesehen sein, dass die Schmierstoffkappe 3 aus einem elektrisch und/oder thermisch isolierenden Material gefertigt ist.

Im Rahmen der gegenständlichen Offenbarung werden Merkmale üblicherweise mit einem unbestimmten Artikel "ein, eine, eines, einer" eingeführt. Sofern es sich aus dem Kontext nicht anders ergibt, ist dieser unbestimmte Artikel nicht als Zahlenangabe zu verstehen, sodass die Offenbarung nicht auf lediglich ein Vorkommen des jeweiligen Merkmals beschränkt ist.

## Patentansprüche

1. Kupplungspfanne (1) zur Kupplung mit einer Kupplungskugel, wobei die Kupplungspfanne (1) einen konkaven Kupplungsaufnahmeraum (2) mit einer Haupteinführrichtung (10) für die Kupplungskugel aufweist, wobei in dem Kupplungsaufnahmeraum (2) eine im Wesentlichen halbkugelförmige Schmierstoffkappe (3) mit einem stirnseitigen Rand (4) angeordnet ist, wobei die Schmierstoffkappe (3) an ihrer konvexen Außenseite eine Innenwandung des Kupplungsaufnahmeraumes (2) flächig berührt und an ihrer konkaven Innenseite eine Aufnahme für die Kupplungskugel aufweist, wobei die Kupplungspfanne (1) in dem Kupplungsaufnahmeraum (2) eine Einführhilfe (5) aufweist, wobei der stirnseitige Rand (4) der Schmierstoffkappe (3) - in der Haupteinführrichtung (10) gesehen - hinter der Einführhilfe (5) angeordnet ist, und wobei die Einführhilfe (5) den stirnseitigen Rand (4) der Schmierstoffkappe (3) vollständig verdeckt, **dadurch gekennzeichnet, dass** die Einführhilfe (5) ein von der Kupplungspfanne (1) in den Kupplungsaufnahmeraum (2) abragender Fortsatz ist.

2. Kupplungspfanne (1) nach Anspruch 1, **dadurch gekennzeichnet, dass** sich eine an den stirnseitigen Rand (4) angrenzende Innenkante der Schmierstoffkappe (3) auf der Einführhilfe (5) abstützt.

3. Kupplungspfanne (1) nach einem der Ansprüche 1 oder 2, **dadurch gekennzeichnet, dass** die Schmierstoffkappe (3) an dem stirnseitigen Rand (4) wenigstens einen Schlitz (6) aufweist.

4. Kupplungspfanne (1) nach Anspruch 3, **dadurch gekennzeichnet, dass** die Schmierstoffkappe (3) mehrere, insbesondere in gleichen Abständen zueinander angeordnete, Schlitze (6) aufweist.

5. Kupplungspfanne (1) nach einem der Ansprüche 1 bis 4, **dadurch gekennzeichnet, dass** die Schmierstoffkappe (3) eine Verdrehsicherung (7) gegenüber dem Kupplungsaufnahmeraum (2) aufweist.

6. Kupplungspfanne (1) nach Anspruch 5, **dadurch gekennzeichnet, dass** die Verdrehsicherung (7) als wenigstens eine Rippe (8) ausgestaltet ist.

7. Kupplungspfanne (1) nach Anspruch 6, **dadurch gekennzeichnet, dass** die wenigstens Rippe (8) entlang eines Längengrades an der Schmierstoffkappe (3) angeordnet ist.

8. Kupplungspfanne (1) nach Anspruch 6 oder 7, **dadurch gekennzeichnet, dass** die Verdrehsicherung (7) kreuzförmig angeordnete Rippen (8) umfasst.

9. Kupplungspfanne (1) nach einem der Ansprüche 6 bis 8, **dadurch gekennzeichnet, dass** die wenigstens eine Rippe (8) mittig zwischen den Schlitzen (6) angeordnet ist.

10. Kupplungspfanne (1) nach einem der Ansprüche 5 bis 9, **dadurch gekennzeichnet, dass** die Verdrehsicherung (7) von der Schmierstoffkappe (3) abragt und dass an der Innenwandung des Kupplungsaufnahmeraumes (2) eine formschlüssige Aufnahme (9) für die Verdrehsicherung (7) angeordnet ist.

11. Kupplungspfanne (1) nach einem der Ansprüche 1 bis 10, **dadurch gekennzeichnet, dass** die Einführhilfe (5) an die Kupplungspfanne (1) angeformt ist.

12. Kupplungspfanne (1) nach einem der Ansprüche 1 bis 10, **dadurch gekennzeichnet, dass** die Einführhilfe (5) mit der Kupplungspfanne (1) einstückig ausgebildet ist.

## Claims

1. A coupling socket (1) for coupling to a coupling ball, wherein the coupling socket (1) has a concave coupling receiving area (2) with a main insertion direction (10) for the coupling ball, wherein a substantially semispherical lubricant cap (3) with an end face edge (4) is arranged in the coupling receiving area (2), wherein the convex exterior of the lubricant cap (3) is in surface contact with an inner wall of the coupling receiving area (2) and the concave interior of the lubricant cap (3) has a receiving area for the coupling ball, wherein the coupling socket (1) has an insertion aid (5) in the coupling receiving area (2), wherein the end face edge (4) of the lubricant cap (3) - when viewed in the main insertion direction (10) - is located behind the insertion aid (5), wherein the insertion aid (5) completely covers the end face edge (4) of the lubricant cap (3) **characterized in that** the insertion aid (5) is a projection projecting from the coupling socket (1) into the coupling receiving area (2).

2. The coupling socket (1) of claim 1, **characterized in that** an inner rim of the lubricant cap (3) adjacent to the end face edge (4) is supported on the insertion aid (5).

3. The coupling socket (1) of any one of claims 1 or 2, **characterized in that** the lubricant cap (3) has at least one slot (6) on the end face edge (4).

4. The coupling socket (1) of claim 3, **characterized in that** the lubricant cap (3) has a plurality of slots (6), in particular arranged at equal distances from one another.

5. The coupling socket (1) of any one of claims 1 to 4, **characterized in that** the lubricant cap (3) has an anti-rotation means (7) with respect to the coupling receiving area (2).

6. The coupling socket (1) of claim 5, **characterized in that** the anti-rotation means (7) is designed as at least one rib (8).

7. The coupling socket (1) of claim 6, **characterized in that** the at least one rib (8) is arranged along a longitude on the lubricant cap (3).

8. The coupling socket (1) of claim 6 or 7, **characterized in that** the anti-rotation means (7) comprises ribs (8) arranged in a cross shape.

9. The coupling socket (1) of any one of claims 6 to 8, **characterized in that** the at least one rib (8) is arranged centrally between the slots (6).

10. The coupling socket (1) of any one of claims 5 to 9, **characterized in that** the anti-rotation means (7) projects from the lubricant cap (3) and **in that** a form-fit receiving area (9) for the anti-rotation means (7) is arranged on the inner wall of the coupling receiving area (2).

11. The coupling socket (1) of any one of claims 1 to 10, **characterized in that** the insertion aid (5) is moulded to the coupling socket (1).

12. The coupling socket (1) of any one of claims 1 to 10, **characterized in that** the insertion aid (5) is integrally formed with the coupling socket (1).

## Revendications

1. Un manchon d'accouplement (1) pour l'accouplement à une boule d'accouplement, dans lequel le manchon d'accouplement (1) a une zone de réception d'accouplement (2) avec une direction d'insertion principale (10) pour la boule d'accouplement, dans lequel un capuchon lubrifiant (3) sensiblement semi-sphérique avec une face d'extrémité (4) est disposé dans la zone de réception d'accouplement (2), dans lequel l'extérieur convexe du capuchon lubrifiant (3) est en contact de surface avec une paroi intérieure de la zone de réception d'accouplement (2) et l'intérieur concave du capuchon lubrifiant (3) a une zone de réception pour la boule d'accouplement, dans lequel le manchon d'accouplement (1) comporte une aide à l'insertion (5) dans la zone de réception de l'accouplement (2), dans lequel le bord de la face d'extrémité (4) du capuchon lubrifiant (3) - vu dans la direction d'insertion principale (10) - est situé derrière l'aide à l'insertion (5), dans lequel l'aide à l'insertion (5) recouvre complètement le bord de la face d'extrémité (4) du capuchon lubrifiant (3) **caractérisé en ce que** l'aide à l'insertion (5) est une projection faisant saillie du manchon d'accouplement (1) dans la zone de réception de l'accouplement (2).

2. Le manchon d'accouplement (1) de la revendication 1, **caractérisé en ce qu'**un bord intérieur du capuchon de lubrifiant (3) adjacent au bord de la face d'extrémité (4) est supporté par l'aide à l'insertion (5).

3. Le manchon d'accouplement (1) de l'une quelconque des revendications 1 ou 2, **caractérisé en ce que** le capuchon lubrifiant (3) comporte au moins une fente (6) sur le bord de la face d'extrémité (4).

4. Le manchon d'accouplement (1) de la revendication 3, **caractérisé en ce que** le capuchon lubrifiant (3) comporte plusieurs fentes (6), notamment disposées à égale distance les unes des autres.

5. Le manchon d'accouplement (1) de l'une quelconque des revendications 1 à 4, **caractérisé en ce que** le capuchon lubrifiant (3) est doté d'un moyen anti-rotation (7) par rapport à la zone de réception de l'accouplement (2).

6. Le manchon d'accouplement (1) de la revendication 5, **caractérisé en ce que** le moyen anti-rotation (7) est conçu comme au moins une nervure (8).

7. Le manchon d'accouplement (1) de la revendication 6, **caractérisé par le fait que** l'au moins une nervure (8) est disposée le long d'une longitude sur le capuchon de lubrifiant (3).

8. Le manchon d'accouplement (1) de la revendication 6 ou 7, **caractérisé en ce que** le moyen anti-rotation (7) comprend des nervures (8) disposées en forme de croix.

9. Le manchon d'accouplement (1) de l'une quelconque des revendications 6 à 8, **caractérisé en ce que** la nervure (8) au moins est disposée au centre entre les fentes (6).

10. Le manchon d'accouplement (1) de l'une quelconque des revendications 5 à 9, **caractérisé par le fait que** le moyen anti-rotation (7) fait saillie par rapport au capuchon de lubrifiant (3) et **par le fait qu'**une zone de réception de forme (9) pour le moyen anti-rotation (7) est disposée sur la paroi intérieure de la zone de réception de l'accouplement (2).

11. Le manchon d'accouplement (1) de l'une quelconque des revendications 1 à 10, **caractérisé par le fait que** l'aide à l'insertion (5) est moulée sur le manchon d'accouplement (1).

12. Le manchon d'accouplement (1) de l'une des revendications 1 à 10, **caractérisé par le fait que** l'aide à l'insertion (5) est formée intégralement avec le manchon d'accouplement (1).
